(19) Europäisches Patentamt
European Patent Office
Office européen des brevets

(11) **EP 2 833 174 A1**

(12) **EUROPEAN PATENT APPLICATION**

(43) Date of publication:
**04.02.2015 Bulletin 2015/06**

(51) Int Cl.:
*G02B 6/02* (2006.01)   *G02B 6/036* (2006.01)
*H04B 10/2507* (2013.01)

(21) Application number: **14178936.2**

(22) Date of filing: **29.07.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **29.07.2013 JP 2013156476**

(71) Applicant: **Sumitomo Electric Industries, Ltd.**
**Osaka-shi,**
**Osaka 541 (JP)**

(72) Inventors:
• **YAMAMOTO, Yoshinori**
**YOKOHAMA-SHI, KANAGAWA (JP)**
• **HIRANO, Masaaki**
**YOKOHAMA-SHI, KANAGAWA (JP)**

(74) Representative: **Kreutzer, Ulrich et al**
**Cabinet Beau de Loménie**
**Lessingstrasse 6**
**80336 München (DE)**

(54) **Optical fiber and optical transmission system**

(57)    An optical fiber includes a core and a cladding that surrounds the core. The optical fiber has a group index of 1.465 or less at a wavelength of 1550 nm and an absolute value of chromatic dispersion of 4 ps/nm/km or less at a wavelength of 1550 nm. A relative refractive index difference ($\Delta_0$) between the core and pure silica ranges from -0.1% to 0.1%. The core includes a first core disposed at the center of the optical fiber and a second core surrounding the first core. A relative refractive index difference ($\Delta_1$) between the first core and the cladding ranges from 0.6% to 0.9%. A relative refractive index difference ($\Delta_2$) between the second core and the cladding ranges from 0.02% to 0.12%. The ratio of the diameter of the second core to the diameter of the first core ranges from 2.0 to 6.0.

FIG. 2

**Description**

BACKGROUND OF THE INVENTION

Field of the Invention

The present invention relates to an optical fiber and an optical transmission system.

Description of the Related Art

Optical transmission systems including a single-mode optical fiber as a signal light transmission path are demanded to have less time (delay time, or "latency") for signal light to transmit from a transmitter to a receiver. This demand has been increasing in recent years. For example, a very small difference in delay time on the order of milliseconds or less in financial transactions using an optical transmission system may influence an enormous financial benefit.
The latency $T_L$ [s] of signal light in an optical fiber transmission path having a transmission length L [m] is expressed by Equation (1):

$$T_L = \frac{L}{v_g} = \frac{L}{(c/n_g)} = \frac{Ln_g}{c} \qquad (1)$$

where c denotes the speed ($3 \times 10^8$ [m/s]) of light in vacuum space, vg denotes the group velocity of signal light in the optical fiber transmission path, and $n_g$ denotes the group index of the optical fiber. Equation (1) implies that an optical fiber having a low group index ng is suitable to reduce the latency $T_L$.
An ITU-T Recommendation G.652 compliant standard single-mode fiber (SSMF) has a group index $n_g$ of 1.4679. On the other hand, an optical fiber having a low group index $n_g$ of 1.4620 is described in John A. Jay, "Low Signal Latency in Optical Fiber Networks", Proceedings of the 60th IWCS Conference, pp. 429-437 (Non Patent Literature 1).

SUMMARY OF THE INVENTION

Accordingly, it is an object of the present invention to provide an optical fiber capable of reducing latency of signal light (hereinafter, referred to as "signal latency") and an optical transmission system including the optical fiber.
A first aspect of the present invention provides an optical fiber including a core and a cladding that surrounds the core. The optical fiber has a group index of 1.465 or less at a wavelength of 1550 nm and an absolute value of chromatic dispersion of 4 ps/nm/km or less at a wavelength of 1550 nm. A second aspect of the present invention provides an optical transmission system including the optical fiber according to the first aspect of the present invention as a signal light transmission path.
According to the present invention, signal latency can be reduced.

BRIEF DESCRIPTION OF THE DRAWINGS

Figure 1 is a schematic diagram illustrating an optical transmission system according to an embodiment of the present invention.

Figure 2 is a schematic diagram illustrating an exemplary refractive index profile of an optical fiber according to an embodiment of the present invention.

Figure 3 is a graph illustrating the relationship between a group index $n_g$ of the optical fiber according to the embodiment at a wavelength of 1550 nm and a relative refractive index difference $\Delta_1$ between a first core and a cladding of the optical fiber.

Figure 4 is a graph illustrating the relationship between bend loss of the optical fiber according to the embodiment in a diameter of 20 mm and at a wavelength of 1550 nm and the relative refractive index difference $\Delta_1$ between the first core and the cladding.

Figure 5 is a graph illustrating the relationship between the group index ng of the optical fiber according to the embodiment at a wavelength of 1550 nm and a relative refractive index difference $\Delta_2$ between a second core and the cladding of the optical fiber.

Figure 6 is a graph illustrating the relationship between a cutoff wavelength of the optical fiber according to the embodiment and the relative refractive index difference $\Delta_2$ between the second core and the cladding.

Figure 7 is a graph illustrating the relationship between the cutoff wavelength of the optical fiber according to the embodiment and the ratio of the diameter 2b of the second core to the diameter 2a of the first core in the optical fiber.

Figure 8 is a graph illustrating the relationship between bend loss of the optical fiber according to the embodiment in a diameter of 20 mm and at a wavelength of 1550 nm and the ratio of the diameter 2b of the second core to the diameter 2a of the first core in the optical fiber.

DESCRIPTION OF THE PREFERRED EMBODIMENTS

The optical fiber described in Non Patent Literature 1 is an ITU-T Recommendation G.652 compliant single-mode fiber and has a chromatic dispersion of approximately 17 ps/nm/km at a wavelength of 1550 nm. Dispersion of transmission optical fiber causes linear noise that is a contributor to degradation in the quality of signal light and, accordingly, has to be compensated by a dispersion compensation module. The inventor has found that signal latency cannot be reduced merely by reducing a group index ng of an optical fiber used as a transmission path in an optical transmission system.

Examples of the dispersion compensation module include a dispersion compensating optical fiber (DCF) that has dispersion of a different sign from dispersion of a transmission optical fiber and has a large absolute value of the dispersion. Although the transmission optical fiber has a length ranging from, for example, 80 km to 100 km per span, the DCF has a length ranging from a few kilometers to several tens of kilometers per span. Since the transmission optical fiber and the DCF are connected in series, signal latency increases depending on the length of the DCF.

A digital signal processor (DSP) typically represented by digital coherent technology may be used as a dispersion compensation module. The DSP, serving as a dispersion compensation module, is included in a receiver and is configured to equalize waveform distortion of signal light caused by dispersion in a transmission optical fiber. To equalize the waveform distortion of signal light caused by a large dispersion, the number of taps in the DSP has to be increased. Signal latency increases depending on the number of taps in the DSP.

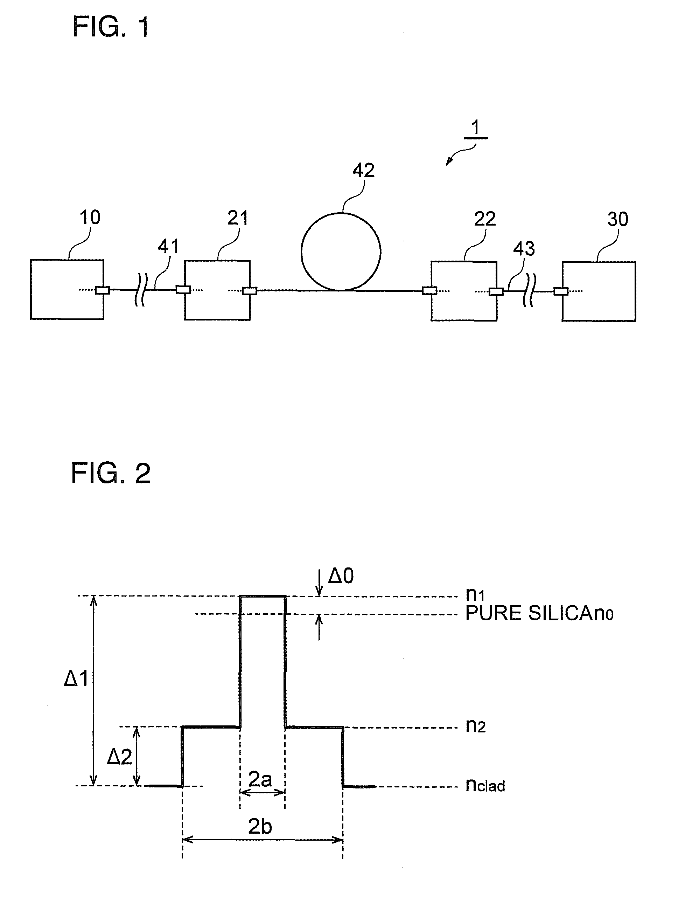

Embodiments of the present invention will be described in detail with reference to the accompanying drawings. Figure 1 is a schematic diagram illustrating an optical transmission system 1 according to an embodiment of the present invention. The optical transmission system 1 includes a transmitter 10, repeaters 21 and 22, a receiver 30, and optical fibers 41, 42, and 43, serving as transmission paths for signal light. The transmitter 10, the repeaters 21 and 22, and the receiver 30 each include an optical amplifier to amplify the signal light. The signal light transmitted from the transmitter 10 passes through the optical fiber 41, the repeater 21, the optical fiber 42, the repeater 22, and the optical fiber 43 in that order, and reaches the receiver 30. The signal light is received by the receiver 30.

An optical fiber according to an embodiment of the present invention is suitably used as the optical fibers 41 to 43. The optical fiber according to the embodiment has a group index $n_g$ of 1.465 or less at a wavelength of 1550 nm and an absolute value of chromatic dispersion of 4 ps/nm/km or less at a wavelength of 1550 nm. The group index $n_g$ of the optical fiber is expressed by Equations (2) and (3):

$$n_g = n_{eff} + \omega \frac{dn_{eff}}{d\omega} \qquad (2)$$

$$n_{eff} = \frac{\beta}{k} = \frac{\beta\lambda}{2\pi} \qquad (3)$$

where $n_{eff}$ denotes the effective refractive index of a propagation mode qualitatively obtained by weighting the refractive index of a core of the optical fiber and the refractive index of a cladding thereof with optical power distribution of propagated light, $\omega$ denotes the angular frequency of light, $\beta$ denotes the propagation constant of the propagation mode, k denotes the wave number of light, and $\lambda$ denotes the wavelength of light.

If the group index $n_g$ is less than or equal to 1.465, a latency of 10 μs can be reduced per 1,000-km length as compared with the SSMF. Furthermore, the group index $n_g$ of the optical fiber is preferably less than or equal to 1.462. If the group index $n_g$ is 1.462 or less, a latency of 20 μs can be reduced per 1,000-km length as compared with the SSMF.

The optical fiber according to the embodiment of the present invention preferably includes two or more layered cores and a cladding. Figure 2 is a schematic diagram illustrating an exemplary refractive index profile of the optical fiber according to this embodiment. The optical fiber of Fig. 2 includes a first core disposed at the center of the optical fiber, a second core that surrounds the first core, and a cladding that surrounds the second core. Let $n_1$ and 2a denote the refractive index and diameter of the first core, respectively, let $n_2$ and 2b denote the refractive index and diameter of the second core, respectively, let $n_{clad}$ denote the refractive index of the cladding, and let $n_0$ denote the refractive index of pure silica.

A relative refractive index difference $\Delta_1$ [%] between the first core and the cladding is expressed by Equation (4).

$$\Delta_1 = 100 \times \frac{n_1 - n_{clad}}{n_1} \qquad (4)$$

A relative refractive index difference $\Delta_2$ [%] between the second core and the cladding is expressed by Equation (5).

$$\Delta_2 = 100 \times \frac{n_2 - n_{clad}}{n_2} \qquad (5)$$

A relative refractive index difference $\Delta_0$ [%] between the first core and pure silica is expressed by Equation (6).

$$\Delta_0 = 100 \times \frac{n_1 - n_0}{n_1} \qquad (6)$$

The magnitude relationship between the refractive indices of regions in the optical fiber illustrated in Fig. 2 is $n_1 > n_0 > n_2 > n_{clad}$ or $n_0 > n_1 > n_2 > n_{clad}$. This optical fiber is predominantly composed of silica glass and is doped with impurities to control the refractive index in the regions as necessary. The first core may be made of pure silica without being doped with a refractive index increaser, such as Ge. Each of the second core and the cladding may be doped with a refractive index depressant, such as F.

Preferably, the relative refractive index difference $\Delta_0$ between the first core and pure silica ranges from -0.1 % to 0.1 %. Reducing the refractive index of the first core through which most of signal light passes can reduce the group index $n_g$. Furthermore, the core is preferably not doped with Ge. To negatively increase the relative refractive index difference $\Delta_0$, the first core would have to be doped with a large amount of F, thus leading to an increase in attenuation. It is not preferable from the viewpoint of manufacturability.

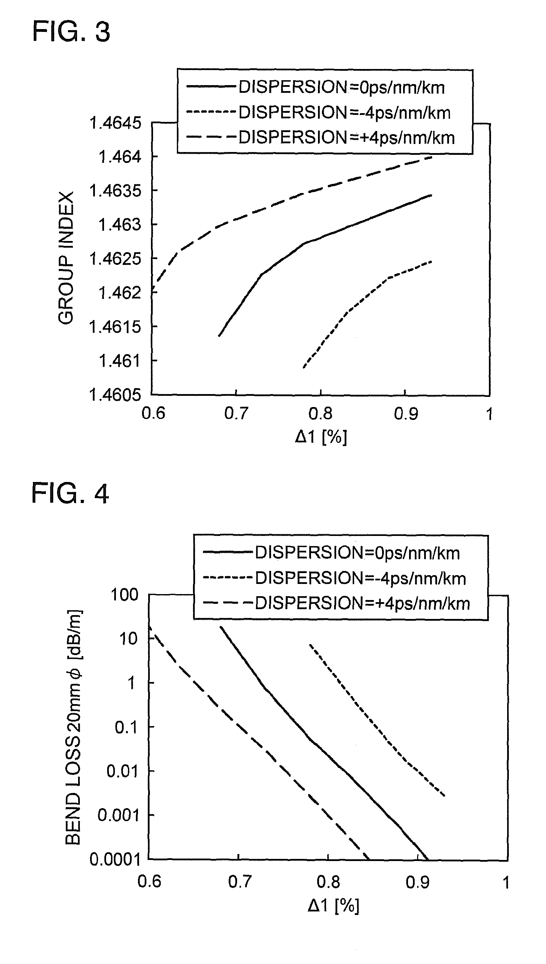

Figure 3 is a graph illustrating the relationship between the group index $n_g$ of the optical fiber of Fig. 2 at a wavelength of 1550 nm and the relative refractive index difference $\Delta_1$ between the first core and the cladding of the optical fiber. Figure 4 is a graph illustrating the relationship between bend loss of the optical fiber of Fig. 2 in a diameter of 20 mm and at a wavelength of 1550 nm and the relative refractive index difference $\Delta_1$ between the first core and the cladding. In this case, the relative refractive index difference $\Delta_0$ between the first core and pure silica is 0.06%, the relative refractive index difference $\Delta_2$ between the second core and the cladding is 0.08%, the ratio (2b/2a) of the diameter 2b of the second core to the diameter 2a of the first core is 4.0, and chromatic dispersions at a wavelength of 1550 nm are -4 ps/nm/km, 0 ps/nm/km, and +4 ps/nm/km.

Figure 3 demonstrates that the relative refractive index difference $\Delta_1$ has to be less than or equal to 0.9% so that the group index $n_g$ of the optical fiber is less than or equal to 1.464. In addition, Fig. 4 demonstrates that the relative refractive index difference $\Delta_1$ has to be greater than or equal to 0.6% so that the bend loss of the optical fiber is less than or equal to 20 dB/m at which there is $n_0$ problem in practical use. Thus, the relative refractive index difference $\Delta_1$ preferably ranges from 0.6% to 0.9%.

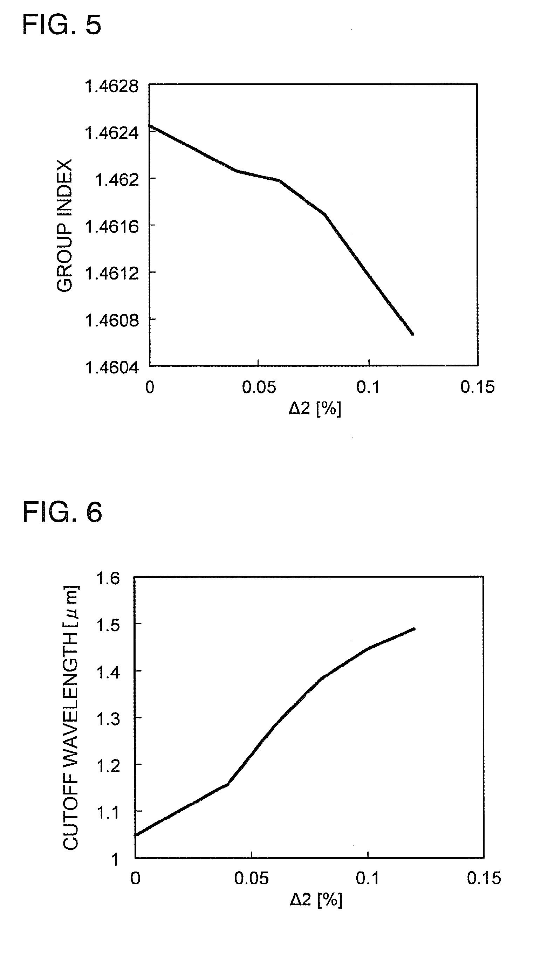

Figure 5 is a graph illustrating the relationship between the group index $n_g$ of the optical fiber of Fig. 2 at a wavelength of 1550 nm and the relative refractive index difference $\Delta_2$ between the second core and the cladding of the optical fiber. Figure 6 is a graph illustrating the relationship between a cutoff wavelength of the optical fiber of Fig. 2 and the relative refractive index difference $\Delta_2$ between the second core and the cladding. In this case, the relative refractive

index difference $\Delta_0$ between the first core and pure silica is 0.06%, the relative refractive index difference $\Delta_1$ between the first core and the cladding is 0.73%, the ratio (2b/2a) of the diameter 2b of the second core to the diameter 2a of the first core is 4.0, and chromatic dispersion at a wavelength of 1550 nm is 0 ps/nm/km.

Figure 5 demonstrates that as the relative refractive index difference $\Delta_2$ is larger, the group index $n_g$ is lower, and the relative refractive index difference $\Delta_2$ accordingly has to be greater than or equal to 0.02% so that the group index $n_g$ of the optical fiber is less than or equal to 1.462. Furthermore, Fig. 6 demonstrates that when the relative refractive index difference $\Delta_2$ is too large, the cutoff wavelength is long, and the relative refractive index difference $\Delta_2$ accordingly has to be less than or equal to 0.12% so that the cutoff wavelength is less than or equal to 1.53 $\mu$m to achieve a single-mode operation at C-band. Thus, the relative refractive index difference $\Delta_2$ preferably ranges from 0.02% to 0.12%.

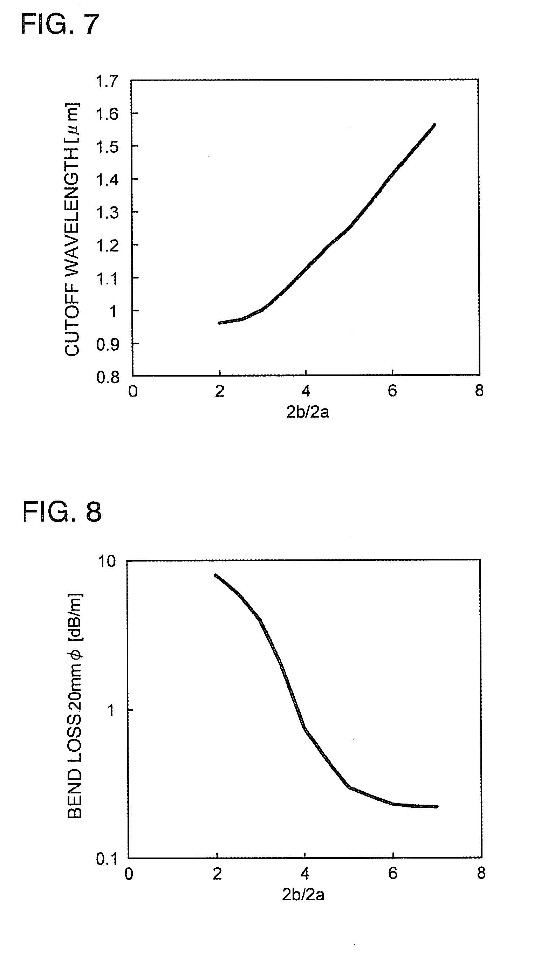

Figure 7 is a graph illustrating the relationship between the cutoff wavelength of the optical fiber of Fig. 2 and the ratio (2b/2a) of the diameter 2b of the second core to the diameter 2a of the first core in the optical fiber. Figure 8 is a graph illustrating the relationship between bend loss of the optical fiber of Fig. 2 in a diameter of 20 mm and at a wavelength of 1550 nm and the ratio (2b/2a) of the diameter 2b of the second core to the diameter 2a of the first core. In this case, the relative refractive index difference $\Delta_0$ between the first core and pure silica is 0.06%, the relative refractive index difference $\Delta_1$ between the first core and the cladding is 0.73%, the relative refractive index difference $\Delta_2$ between the second core and the cladding is 0.08%, and chromatic dispersion at a wavelength of 1550 nm is 0 ps/nm/km.

Figure 7 demonstrates that as the ratio 2b/2a is larger, the cutoff wavelength is longer, and the ratio 2b/2a accordingly has to be less than or equal to 6.0 so that the cutoff wavelength is less than or equal to 1.53 $\mu$m to achieve a single-mode operation at C-band. Furthermore, Fig. 8 demonstrates that as the ratio 2b/2a is smaller, the bend loss is larger, and the ratio 2b/2a accordingly has to be greater than or equal to 2.0 so that the bend loss is less than or equal to 10 dB/m. Considering the cutoff wavelength and the bend loss, therefore, the ratio (2b/2a) of the diameter 2b of the second core to the diameter 2a of the first core preferably ranges from 2.0 to 6.0. Note that the ratio 2b/2a does not significantly influence the group index $n_g$.

The above-described results obtained from Figs. 3 to 8 reveal that, preferably, the core of the optical fiber according to the embodiment of the present invention includes the first core disposed at the center of the optical fiber and the second core surrounding the first core, the relative refractive index difference $\Delta_1$ between the first core and the cladding ranges from 0.6% to 0.9%, the relative refractive index difference $\Delta_2$ between the second core and the cladding ranges from 0.02% to 0.12%, and the ratio (2b/2a) of the diameter 2b of the second core to the diameter 2a of the first core ranges from 2.0 to 6.0.

Table I describes the specifications of optical fibers according to Examples 1 to 11. Table II describes the characteristics of the optical fibers according to Examples 1 to 11. These tables also describe the specifications and characteristics of a related-art single-mode optical fiber (SMF) according to Comparative Example 1 and those of a related-art dispersion shifted optical fiber (DSF) according to Comparative Example 2.

Table I

| Index profile | Comparative example | | Example | | | | |
|---|---|---|---|---|---|---|---|
| | 1 (SMF) | 2 (DSF) | 1 | 2 | 3 | 4 | 5 |
| $\Delta_0$ (%) | 0.34 | 0.72 | 0.00 | 0.06 | 0.09 | -0.08 | -0.03 |
| $\Delta_1$ (%) | 0.34 | 0.72 | 0.73 | 0.73 | 0.88 | 0.71 | 0.62 |
| $\Delta_2$ (%) | - | 0.07 | 0.08 | 0.08 | 0.08 | 0.06 | 0.02 |
| 2b/2a | - | 3.8 | 4.0 | 4.0 | 3.5 | 4.0 | 4.5 |
| 2a ($\mu$m) | 8.4 | 4.1 | 4.4 | 4.4 | 4.3 | 4.5 | 5.0 |

| Index profile | Example | | | | | |
|---|---|---|---|---|---|---|
| | 6 | 7 | 8 | 9 | 10 | 11 |
| $\Delta_0$ (%) | 0.06 | 0.00 | 0.02 | 0.00 | 0.06 | 0.06 |
| $\Delta_1$ (%) | 0.72 | 0.76 | 0.79 | 0.78 | 0.89 | 0.63 |
| $\Delta_2$ (%) | 0.12 | 0.06 | 0.04 | 0.08 | 0.04 | 0.08 |
| 2b/2a | 3.5 | 5.0 | 6.0 | 2.0 | 4.0 | 4.0 |
| 2a ($\mu$m) | 4.5 | 4.5 | 4.7 | 3.9 | 4.8 | 4.5 |

Table II

| Characteristics at 1550 nm | Comparative example | | Example | | | | |
| --- | --- | --- | --- | --- | --- | --- | --- |
| | 1 (SMF) | 2 (DSF) | 1 | 2 | 3 | 4 | 5 |
| Attenuation (dB/km) | 0.19 | 0.20 | 0.17 | 0.16 | 0.18 | 0.18 | 0.17 |
| Group index | 1.4677 | 1.4711 | 1.4608 | 1.4617 | 1.4626 | 1.4600 | 1.4613 |
| Chromatic dispersion (ps/nm/km) | 16.8 | 0.00 | -0.20 | 0.08 | -1.34 | 0.42 | 3.77 |
| Dispersion slope (ps/nm$^2$/km) | 0.058 | 0.065 | 0.059 | 0.059 | 0.049 | 0.055 | 0.049 |
| MFD ($\mu$m) | 10.3 | - | 7.8 | 7.8 | 6.9 | 7.8 | 8.0 |
| Aeff ($\mu$m$^2$) | 80 | 45 | 46 | 45 | 35 | 45 | 47 |
| Cutoff wavelength (nm) Bend loss in a diameter of 20 mm (dB/m) | - 6.0 | 1350 0.9 | 1390 0.8 | 1383 0.8 | 1295 <0.1 | 1275 1.5 | 1128 7.0 |

| Characteristics at 1550 nm | Example | | | | | |
| --- | --- | --- | --- | --- | --- | --- |
| | 6 | 7 | 8 | 9 | 10 | 11 |
| Attenuation (dB/km) | 0.17 | 0.16 | 0.17 | 0.17 | 0.16 | 0.17 |
| Group index | 1.4618 | 1.4613 | 1.4622 | 1.4603 | 1.4634 | 1.4615 |
| Chromatic dispersion (ps/nm/km) | 3.09 | -0.51 | 1.61 | -3.03 | 3.76 | 2.53 |
| Dispersion slope (ps/nm$^2$/km) | 0.064 | 0.048 | 0.042 | 0.053 | 0.040 | 0.067 |
| MFD ($\mu$m) | 8.1 | 7.4 | 7.1 | 7.4 | 7.0 | 8.7 |
| Aeff ($\mu$m$^2$) | 48 | 41 | 37 | 40 | 33 | 56 |
| Cutoff wavelength (nm) | 1503 | 1488 | 1514 | 995 | 1316 | 1396 |
| Bend loss in a diameter of 20 mm (dB/m) | 0.2 | 0.2 | <0.1 | 7.1 | <0.1 | 11.0 |

As described above, since the group index $n_g$ of the optical fiber according to the embodiment of the present invention is low, 1.465 or less, signal latency can be reduced. In addition, since the absolute value of optical fiber chromatic dispersion in this embodiment is small, 4 ps/nm/km or less, it is unnecessary to provide a dispersion compensation module, which gives a signal latency, or it needs a dispersion compensation module which gives little signal latency. The optical fiber according to the embodiment of the present invention and the optical transmission system including the optical fiber as a signal light transmission path can reduce signal latency.

**Claims**

1. An optical fiber comprising:

   a core; and
   a cladding that surrounds the core,
   wherein the optical fiber has a group index of 1.465 or less at a wavelength of 1550 nm and an absolute value of chromatic dispersion of 4 ps/nm/km or less at a wavelength of 1550 nm.

2. The optical fiber according to Claim 1,
   wherein a relative refractive index difference between the core and pure silica ranges from -0.1% to 0.1%.

3. The optical fiber according to Claim 1 or 2,
   wherein the core includes a first core disposed at the center of the optical fiber and a second core surrounding the first core,
   wherein a relative refractive index difference between the first core and the cladding ranges from 0.6% to 0.9%,
   wherein a relative refractive index difference between the second core and the cladding ranges from 0.02% to 0.12%, and
   wherein the ratio of the diameter of the second core to the diameter of the first core ranges from 2.0 to 6.0.

4. The optical fiber according to Claim 3,

wherein the core is free from Ge.

5. An optical transmission system comprising the optical fiber according to any one of Claims 1 to 4 as a signal light transmission path.

# FIG. 1

# FIG. 2

## FIG. 3

## FIG. 4

## FIG. 5

## FIG. 6

## FIG. 7

## FIG. 8

Europäisches
Patentamt

European
Patent Office

Office européen
des brevets

**EUROPEAN SEARCH REPORT**

Application Number

EP 14 17 8936

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 352 047 A1 (DRAKA COMTEQ BV [NL]) 3 August 2011 (2011-08-03) * paragraph [0031] - paragraph [0039]; figure 2 * | 1-5 | INV. G02B6/02 ADD. G02B6/036 H04B10/2507 |
| X | US 2003/147610 A1 (TSUKITANI MASAO [JP] ET AL) 7 August 2003 (2003-08-07) * paragraph [0063] - paragraph [0075]; figure 11; table 2 * | 1-5 | |
| X | US 2004/114897 A1 (KOSHIBA MASANORI [JP] ET AL) 17 June 2004 (2004-06-17) * paragraphs [0012], [0020], [0074] - [0085], [0097], [0098]; figures 2,3,7 * | 1,2,5 | |
| A | JP H07 230015 A (FURUKAWA ELECTRIC CO LTD) 29 August 1995 (1995-08-29) * abstract; figures 1a-b * * paragraphs [0010], [0018] * | 3,4 | |

TECHNICAL FIELDS
SEARCHED    (IPC)

G02B

The present search report has been drawn up for all claims

| Place of search | Date of completion of the search | Examiner |
|---|---|---|
| The Hague | 24 November 2014 | Bourhis, J |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

&: member of the same patent family, corresponding
    document

EPO FORM 1503 03.82 (P04C01)

**ANNEX TO THE EUROPEAN SEARCH REPORT
ON EUROPEAN PATENT APPLICATION NO.**                    EP 14 17 8936

This annex lists the patent family members relating to the patent documents cited in the above-mentioned European search report.
The members are as contained in the European Patent Office EDP file on
The European Patent Office is in no way liable for these particulars which are merely given for the purpose of information.

24-11-2014

| Patent document cited in search report | | Publication date | Patent family member(s) | | Publication date |
|---|---|---|---|---|---|
| EP 2352047 | A1 | 03-08-2011 | CN | 102141649 A | 03-08-2011 |
|  |  |  | EP | 2352047 A1 | 03-08-2011 |
|  |  |  | JP | 2011170348 A | 01-09-2011 |
|  |  |  | US | 2011188826 A1 | 04-08-2011 |
| US 2003147610 | A1 | 07-08-2003 | JP | 2003084163 A | 19-03-2003 |
|  |  |  | US | 2003147610 A1 | 07-08-2003 |
| US 2004114897 | A1 | 17-06-2004 | JP | 2004240390 A | 26-08-2004 |
|  |  |  | US | 2004114897 A1 | 17-06-2004 |
| JP H07230015 | A | 29-08-1995 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JOHN A. JAY.** Low Signal Latency in Optical Fiber Networks. *Proceedings of the 60th IWCS Conference,* 429-437